# EUROPÄISCHE PATENTANMELDUNG

(11) **EP 1 614 519 A1**
(43) Veröffentlichungstag der Anmeldung: **11.01.2006**
(21) Anmeldenummer: 05014515.0
(22) Anmeldetag: 05.07.2005
(51) Int. Cl.: B29C 45/16

(54) **Vorrichtung zum Spritzgiessen von Bürstenkörpern**

(30) Priorität: 05.07.2004 DE 102004032494
(71) Anmelder: M + C Schiffer GmbH, 53577 Neustadt-Wied (DE)
(72) Erfinder: Clos, Thomas, 50968 Köln (DE)
(74) Vertreter: Grünecker, Kinkeldey, Stockmair & Schwanhäusser Anwaltssozietät

(57) **Zusammenfassung**

Die vorliegende Erfindung betrifft eine Vorrichtung zum Spritzgießen von Bürstenkörpern mit einer ersten Spritzgießstation (I) mit wenigstens einem Formnest (8) zum Ausbilden eines Bürstengrundkörpers (12), einer zweiten Spritzgießstation (II) mit wenigstens einem zweiten Formnest (9), das größer als das erste Formnest (8) ist, zum Umspritzen des Bürstengrundkörpers (12) und einer Handhabe (1) mit der die Bürstengrundkörper von der ersten zu der zweiten Spritzgießstation (I; II) bewegbar sind. Zur Schaffung einer Vorrichtung zum Spritzgießen der vorerwähnten Art, mit der das Umsetzen von Bürstengrundkörpern aus dem ersten Formnest (8) in das zweite Formnest (9) auf einfache und schnelle sowie zuverlässige Art durchführbar ist, wird mit der vorliegenden Erfindung vorgeschlagen, dass die Handhabe (1) außerhalb eines das erste und/oder das zweite Formnest (8; 9) aussparenden Werkzeugs (4, 6) angeordnet ist und dass die Handhabe (1) im Wesentlichen in der Trennebene des Werkzeugs (4, 6) vorgesehen ist (Fig. 1).

## Beschreibung

Die vorliegende Erfindung betrifft eine Vorrichtung zum Spritzgießen von Bürstenkörpern, insbesondere von Zahnbürstenkörpern und bezieht sich insbesondere auf die Ausbildung von Bürstenkörpern im Wege des Mehrkomponenten- bzw. Mehrschichtspritzgießens. Hierbei wird der Bürstenkörper in mehreren aufeinander folgenden Spritzgießstationen fertig gestellt, in denen ein zunächst ausgebildeter Bürstengrundkörper, der in einer ersten Spritzgießstation ausgeformt wird, in zweiten und weiteren Spritzgießstationen durch weitere Komponenten oder aber durch eine identisch zu der in der ersten Spritzgießstation verarbeiteten Kunststoffkomponente ist, umspritzt wird. Im letzten Fall werden die Bürstenkörper in unterschiedlichen Stationen hergestellt, um beispielsweise optimal aufeinander abgestimmte Abkühlzeiten in den jeweiligen Stationen zu nutzen oder aber durch Anwendung verschiedener Spritzdrücke optimierte Verfahrensbedingungen in den einzelnen Spritzgießstationen zu realisieren. Dies kann insbesondere dann bedeutsam sein, wenn die an dem Bürstenkörper vorzusehenden Reinigungselemente, im Falle einer Zahnbürste sind dies regelmäßig Borstenbündel, in einer Spritzgießstation als Einlegeteile in das Formnest eingebracht und mit den hierin erstarrenden Bürstengrundkörper verbunden werden. Hierbei werden regelmäßig relativ geringe Spritzdrücke aufgebracht, wohingegen zur Ausbildung einer guten Oberflächenqualität in anderen Stationen höhere Spritzgießdrücke angewendet werden sollten.

Die vorliegende Erfindung geht beispielsweise von einem Stand der Technik aus, wie er aus der DE-C-41 27 621 bekannt ist. Dieser Stand der Technik offenbart eine Vorrichtung zum Spritzgießen von Bürstenkörpern im Wege des Mehrkomponenten-Spritzgießens. Die Vorrichtung hat eine erste Spritzgießstation mit wenigstens einem ersten Formnest zum Ausbilden eines Bürstengrundkörpers, und eine zweite Spritzgießstation mit wenigstens einem zweiten Formnest, das größer als das erste Formnest ist, zum Umspritzen des Bürstengrundkörpers. Bei diesem vorbekannten Stand der Technik sind beide Formnester in einem gemeinsamen Spritzgießwerkzeug ausgespart. In diesem Spritzgießwerkzeug ist integriert eine Handhabe, welche zu jedem der Formnester eine die Formnester komplettierende Kavität aufweist und in Form eines Wendeteiles dreh- und aushebbar in dem Werkzeug gelagert ist.

Als gattungsbildend kann ebenfalls die DE-U-91 03 553 angesehen werden, die eine Vorrichtung zum Spritzgießen von Bürstenkörpern im Wege des Mehrkomponenten-Spritzgießens offenbart, bei welcher in einem gemeinsamen Spritzgießwerkzeug die ersten und zweiten Formnester ausgespart sind. Zwischen diesen ersten und zweiten Formnestern befindet sich eine Handhabe, die bei geschlossenem Werkzeug dichtend in diesem angeordnet ist und in das erste Formnest eingreift und bei geöffnetem Werkzeug unter Mitnahme des in dem ersten Formnest hergestellten Bürstengrundkörpers in Richtung auf das zweite Formnest verschwenkbar ist, um den Bürstengrundkörper in dieses zweite Formnest einzubringen.

Bei beiden aus dem vorerwähnten Stand der Technik bekannten Vorrichtungen besteht der Nachteil, dass die jeweiligen Handhaben als integraler Bestandteil des Spritzgießwerkzeugs ausgebildet sind, was mit erheblichen Mehrkosten bei der Erstellung der Vorrichtung verbunden ist. Regelmäßig werden Spritzgießformen nämlich durch Funkenerrosionen hergestellt, so dass die hier zu stellenden Anforderungen an die Präzision zwar erfüllt werden können, was jedoch mit hohen Kosten verbunden ist, insbesondere wenn eine Vielzahl von kleinen Durchbrüchen erstellt werden müssen, wie dies bei der Herstellung von Zahnbürsten der Fall ist. Darüber hinaus muss die beweglich zu dem Werkzeug vorgesehene Handhabe die Formnester dicht abschließen, und zwar mit hoher Präzision, so dass sich bei den üblichen Spritzgießdrücken keine Trennnähte an dem spritzgegossenen Bürstenkörper an den Übergängen zwischen der Handhabe und der jeweils die Handhabe aufweisenden Werkzeug hälfte des Spritzgießwerkzeuges zeigen. Selbst wenn die Handhabe sehr präzise zu der zugeordneten Werkzeughälfte passt, sind Verschleißerscheinungen unvermeidbar, da beide Teile in jedem Spritzgießzyklus relativ zueinander bewegt werden und sich zwangsläufig an den Berührungsflächen ein Verschleiß einstellt. Bei den hierdurch notwendigen Instandhaltungsmaßnahmen an dem Spritzgießwerkzeug muss dieses insgesamt ausgebaut werden, so dass auch ein Formnest in dieser Zeit nicht weiter zur Produktion genutzt werden kann, welches wegen fehlender Grenzflächen zu einer Handhabe keiner Instandhaltung bedarf.

Aus dem Stand der Technik ist es weiterhin bekannt, zum Umsetzen eines Bürstengrundkörpers in das zweite Formnest bei geöffnetem Werkzeug eine vom Werkzeug unabhängige Handhabe zwischen die geöffneten Werkzeughälften zu fahren, den bzw. die Grundkörper zu greifen und in das zweite Formnest umzusetzen. Hierzu werden üblicherweise linear verschiebliche, mit Greifern oder Saugern ausgestatte Handhaben verwendet, um die Bürstengrundkörper aus dem ersten Formnest zu entnehmen und in das zweite Formnest umzusetzen. Bereits das sichere Greifen der in einer Werkzeughälfte befindlichen Grundkörper ist mit erheblichen technischen Schwierigkeiten verbunden. Darüber hinaus muss die Handhabe erst bei geöffnetem Werkzeug zwischen die beiden Werkzeughälften gefahren werden, bevor die Handhabe überhaupt in Aktion treten kann, wodurch die Zykluszeiten erhöht werden.

Der vorliegenden Erfindung liegt das Problem zugrunde, eine Vorrichtung zum Spritzgießen der vorerwähnten Art anzugeben, mit der das Umsetzen von Bürstengrundkörpern aus dem ersten Formnest in das zweite Formnest auf einfache, schnelle und zuverlässige Art durchführbar ist.

Zur Lösung des Problems wird mit der vorliegenden Erfindung eine Vorrichtung mit den Merkmalen von Anspruch 1 angegeben. Diese unterscheidet sich von dem gattungsbildenden Stand der Technik dadurch, dass die Handhabe außerhalb eines, das erste und/oder das zweite Formnest aussparenden Werkzeugs angeordnet ist und dass die Handhabe im Wesentlichen in der Trennebene des Werkzeuges vorgesehen ist.

Mit der erfindungsgemäßen Vorrichtung wird eine Handhabe angegeben, die außerhalb des Werkzeuges angeordnet ist, in dem das erste und/oder das zweite Formnest ausgespart ist. Die Handhabe befindet sich dementsprechend im Wesentlichen außerhalb des Werkzeuges, was bedeutet, dass die Wesentlichen Teile der Handhabe, insbesondere das Lager sowie die Betätigungselemente zum Umsetzen der Bürstengrundkörper im Wesentlichen außerhalb der von dem/den Werkzeug(en) abgedeckten Fläche liegen. Lediglich der unmittelbar den Bürstengrundkörper greifende Teil der Handhabe kann von dem Werkzeug abgedeckt und/oder bei geschlossenem Werkzeug zwischen den Werkzeughälften aufgenommen sein. Dabei befindet sich die Handhabe erfindungsgemäß in der Trennebene des Werkzeuges, was bedeutet, dass sich die Handhabe permanent, also insbesondere auch bei geschlossenem Werkzeug, in etwa auf Höhe der Werkzeugtrennebene befindet und nicht, wie die vorstehend erwähnte und auf Schienen linear geführte Handhabe, zunächst bei geöffnetem Formwerkzeug erst in den Bereich der Trennebene verfahren werden muss. Dementsprechend ist die erfindungsgemäße Handhabe unmittelbar im Bereich des Werkzeugs verfügbar und kann mit kurzer Zugriffszeit die einzelnen Bürstengrundkörper aus dem ersten Formnest entnehmen und in das zweite Formnest umsetzen.

Gemäß einer bevorzugten Weiterbildung der vorliegenden Erfindung ist die Handhabe um eine Drehachse drehbar gelagert, die sich rechtwinklig zu der Trennebene der Formnester erstreckt, und die Handhabe hat zu jedem Bürstengrundkörper ein Halteelement. Bei dieser bevorzugten Ausgestaltung ist die Handhabe in an sich aus dem Stand der Technik bekannter Weise um eine Drehachse drehbar gelagert. Diese erstreckt sich rechtwinklig zu der Trennebene der Formnester, wie dies aus dem vorerwähnten gattungsbildenden Stand der Technik bereits bekannt ist. Die Handhabe weist auch zu jedem Bürstengrundkörper ein Halteelement auf, mit dem dieser von dem ersten Formnest zu dem zweiten Formnest verbringbar ist. Dieses Halteelement kann beispielsweise durch eine Greif- und/oder Saugeinrichtung gebildet sein.

Allerdings ist bei dieser bevorzugten Ausgestaltung das erste Formnest in einem Werkzeug und das zweite Formnest in einem anderen Werkzeug ausgespart. Mit anderen Worten befinden sich die ersten und zweiten Formnester in jeweils separaten Werkzeugen, die vorzugsweise vollkommen unabhängig voneinander sind, also separate Führungen für die beiden Werkzeughälften sowie eine der auswerferseitigen Werkzeughälfte zugeordnete Schließeinheiten aufweisen. Diese jeweiligen ersten und zweiten Werkzeuge sind radial außerhalb der Halteelemente und regelmäßig ortsfest angeordnet. Es können auch mehr als zwei Werkzeuge vorgesehen sein. Jedenfalls befinden sich die Werkzeuge außerhalb einer Hüllfläche, die konzentrisch zu der Drehachse der Handhabe verläuft und die an unterschiedlichen Spritzgießstationen aufgenommenen Halteelemente umhüllt. Dementsprechend bildet die Handhabe ein zentrales Element der Vorrichtung zum Spritzgießen, um welches die einzelnen Werkzeuge mit den jeweiligen ersten und zweiten Formnestern herumgruppiert sind. Weitere Stationen, die in einem Herstellungszyklus zur Herstellung von Bürstenkörpern denkbar sind, können ebenfalls auf einem Umfang, bezogen auf die Handhabe, vorgesehen sein.

Es sei darauf hingewiesen, dass Drehteller auch in der Kunststofftechnik allgemein bekannt sind, um auch spritzgegossene Werkstücke von einer Station zu der Nächsten zu verbringen. Eine entsprechende Handhabe in Form eines Drehtellers ist beispielsweise in "Kunststoffverarbeitung automatisieren", Dieter Meyer, Hanser-Verlag, 1995 auf Seite 162 beschrieben. Dort befindet sich eine Werkzeughälfte einer Spritzgießform auf einem Drehteller und läuft mit diesem von einer Spritzgießstation zu einer Prägestation um, in welcher das in der Spritzgießstation spritzgegossene Werkstück hinterprägt wird. Von dieser Prägestation aus wird die Werkzeughälfte zusammen mit dem fertigen Werkstück zu einer Entnahmestation verbracht und dort von dem Drehteller entnommen.

Gemäß einer weiteren bevorzugten Ausgestaltung der erfindungsgemäßen Vorrichtung ist das Halteelement für einen Bürstengrundkörper durch ein Formwerkzeugteil gebildet, das eine zu dem ersten Formnest passende Kavität aufweist, wobei das Formwerkzeug an der ersten Spritzgießstation zur Komplettierung des ersten Formnestes in das erste Werkzeug einsetzbar ist. Bei dieser bevorzugten Ausgestaltung ergibt sich, dass die eine oder die mehreren Kavitäten des ersten Formnestes sich zu der Drehachse hin öffnen. Dementsprechend ist in dem ersten Werkzeug auch bei geschlossenen Werkzeughälften ein zu der Drehachse hin offenes Formnest gebildet, sofern sich an der ersten Spritzgießstation kein Halteelement gemäß der bevorzugten Weiterbildung der vorliegenden Erfindung befindet. Erst durch dieses Halteelement, welches vorliegend als Formwerkzeugteil gebildet ist, werden die endseitig offenen ersten Formnester verschlossen. Hierbei fluchtet jedes der ersten Formnester mit einer hierzu passenden Kavität, die an dem Werkzeugteil ausgeformt ist. Durch Werkzeugformteil und Werkzeug wird wenigstens eine erste Spritzgießform, vorzugsweise mehrere erste Spritzgießformen an der ersten Spritzgießstation zum Ausformen von Bürstengrundkörpern ausgebildet. Da diese zumindest teilweise in dem Formwerkzeug abgebildet werden, wird der hierbei wirkende Spritzgießdruck durch das Werkzeug insgesamt abgefangen, in das das Formwerkzeugteil einsetzbar ist.

Sofern in der zweiten Spritzgießstation eine Umspritzung lediglich anderer Umfangsflächen des Bürstengrundkörpers als des, in dem Formwerkzeugteil abgebildeten Bereiches desselben vorgesehen werden sollen, befindet sich das Formwerkzeugteil vorzugsweise in der zweiten Spritzgießstation außerhalb des zweiten Werkzeuges. Auch in der zweiten Spritzgießstation kommuniziert die Kavität des Formwerkzeugteiles mit einem korrespondierenden zweiten Formnest. Bei einer besonders kostengünstig herzustellenden Ausgestaltung erfährt die Kavität des Formwerkzeugteiles zwischen der ersten und der zweiten Spritzgießstation keine Veränderung. Dementsprechend wird der Bürstengrundkörper in dem Formwerkzeugteil zunächst ausgeformt und nachfolgend formschlüssig gehalten, um diesen von der ersten zu der zweiten Spritzgießstation zu überführen und dort zu umspritzen. Hierbei ist jedoch der in dem Formwerkzeugteil aufgenommene Bereich des Bürstengrundkörpers von der Umspritzung ausgenommen.

Weitere bevorzugte Ausgestaltungen der vorliegenden Erfindung sind in den Unteransprüchen angegeben.

Die vorliegende Erfindung wird nachfolgend anhand eines Ausführungsbeispieles in Verbindung mit der Zeichnung näher erläutert. In dieser zeigen:
- Figur 1: eine Draufsicht auf die wesentlichen Teile eines Ausführungsbeispiels einer erfindungsgemäßen Vorrichtung zum Spritzgießen von Bürstenkörpern; und
- Figur 2: eine Seitenansicht der des in Figur 1 gezeigten Ausführungsbeispiels.

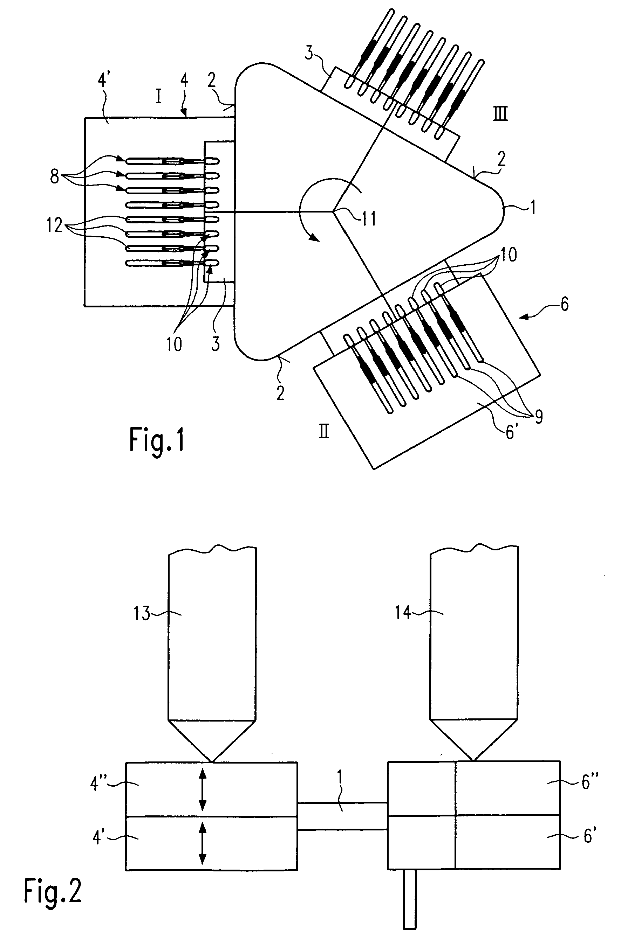

In der in Figur 1 gezeigten Draufsicht eines Ausführungsbeispiels ist ein zentraler Drehteller 1 zu erkennen, der vorliegend das Ausführungsbeispiel einer Handhabe bildet. Dieser Drehteller 1 weist vorliegend drei in einem Winkel von jeweils 60° versetzt zueinander angeordnete Seitenflächen 2 auf, an denen jeweils Lochfeldplatten 3 lösbar gehalten sind, die in dem Ausführungsbeispiel das Formwerkzeugteil ausbilden. Das in Figur 1 gezeigte Ausführungsbeispiel hat drei unterschiedliche Stationen, nämlich eine erste Spritzgießstation I, an der ein erstes Werkzeug 4 mit rechtwinklig zur Zeichnungsebene aufeinander zu bewegbaren Werkzeughälften 4', 4" vorgesehen ist, von denen lediglich eine erste Werkzeughälfte 4' in Figur 1 dargestellt ist. In Drehrichtung des Drehtellers 1 dahinter befindet sich an der nächsten Seitenfläche 2 eine zweite Spritzgießstation II mit einem entsprechenden zweiten Werkzeug 6 und einer in Figur 1 dargestellten zweiten Werkzeughälfte 6'. Schließlich ist hinter der zweiten Spritzgießstation II eine Entnahmestation III vorgesehen.

Die jeweiligen Spritzgießstationen I und II sind als Mehrfachspritzgießstationen ausgebildet. Dementsprechend weist das erste Werkzeug 4 und das zweite Werkzeug 6 jeweils acht erste Formnester 8 bzw. zweite Formnester 9 auf. Die ersten Formnester 8 sind für sich jeweils identisch ausgebildet, jedoch kleiner als die ebenfalls identisch ausgebildeten zweiten Formnester 9.

Jede der Lochfeldplatten 3 hat eine der Anzahl der Formnester 8, 9 entsprechende Anzahl an Kavitäten 10. Diese fluchten in der ersten und der zweiten Spritzgießstation I, II mit den entsprechenden Formnestern 8, 9, die sich zu einer Drehachse 11 des Drehtellers 1 hin öffnen. Dementsprechend gehen die ersten Formnester 8 an der ersten Spritzgießstation absatzfrei in die Kavitäten 10 der Lochfeldplatten 3 über, so dass die jeweiligen ersten Formnester 8 zusammen mit den zugeordneten Kavitäten 10 jeweils eine Spritzgießform zum Abformen von Bürstengrundkörpern 12 ausbilden. Diese Bürstengrundkörper 12 werden in an sich bekannter Weise bei geschlossenem Werkzeug in der ersten Spritzgießstation in einem Spritzgießzyklus aus einer Hartkomponente hergestellt. Danach wird das erste Werkzeug 4 zeitgleich mit dem Werkzeug 6 geöffnet, d.h. die Werkzeughälften fahren auseinander. Hierauf wird der Drehteller 1 vorzugsweise aus der Zeichenebene von Figur 1 heraus angehoben, um die Lochfeldplatte 3 aus einer in der ersten Werkzeughälfte 5 ausgesparten Ausnehmung des ersten Werkzeuges 4 herauszuheben und frei in der Zeichnungsebene von Figur 1 zu drehen. Beim Ausheben des Drehtellers 1 zusammen mit der Lochfeldplatte 3 werden die Bürstengrundkörper 12 aus dem ersten Werkzeug 4 und die umspritzten Bürstenkörper aus dem zweiten Werkzeug 6 entformt.

Vorliegend bilden die Kavitäten 10 jeweils lediglich den Bürstenkopf aus und über diesen Bürstenkopf werden die Bürstengrundkörper 12 an dem Drehteller 1 gehalten. Durch Verschwenkbewegung des Drehtellers 1 um 120° werden die Bürstengrundkörper 12 über die jeweiligen zweiten Formnester 9 des zweiten Werkzeuges 6 gebracht. Der Drehteller 1 wird nunmehr abgesenkt, um die Bürstengrundkörper 12 in die zweiten Formnester 9 einzubringen. Dementsprechend wird in der ersten Spritzgießstation I eine neue Lochfeldplatte eingesetzt. Am Ende dieser Bewegung befinden sich die Bürstengrundkörper 12 in den zweiten Formnestern 9, die größer als die Bürstengrundkörper 12 sind. Die Lochfeldplatte 3 indes befindet sich außerhalb des zweiten Werkzeuges 6. Die Abdichtung der zweiten Formnester 2 radial nach innen zu der Drehachse 11 des Drehtellers 1 kann durch die Lochfeldplatten 3 erfolgen. Üblicherweise wird vorzugsweise das zweite Formnest zumindest im Bereich des Bürstenhalses, also in dem verjüngten Bereich einer Zahnbürste zwischen dem Bürstenkopf und einem verdickten Griffstiel, mit gleichen Abmessungen wie der entsprechende Formabschnitt des ersten Werkzeuges 4 ausgeformt. In diesem Bereich wird dann die Abdichtung des zweiten Formnestes 2 radial nach innen durch den Bürstengrundkörper 12 erfolgen.

Die so in dem zweiten Formnest 9 aufgenommenen Bürstengrundkörper 12 werden vorzugsweise zeitgleich nach Schließen des zweiten Werkzeuges 6 umspritzt. Hierzu wird vorzugsweise der gleiche Zyklus genutzt, mit dem auch der Bürstengrundkörper 12 in dem ersten Werkzeug 6 ausgeformt worden ist. Nach einer hinreichenden Abkühlzeit, die mit Rücksicht auf das Abkühlen der Bürstengrundkörper 12, wie auch mit Rücksicht auf die in dem zweiten Werkzeug 6 erfolgte Umspritzung des Grundkörpers 12 bestimmt wird, öffnen sich die Werkzeuge 4, 6 erneut. Wieder wird der Drehteller 1 ausgehoben und um 120° gedreht, um schließlich die mit den umspritzten Bürstengrundkörpern 12 bestückten Lochfeldplatten 2 an der Entnahmestation III bereit zu halten. Hier können die umspritzten Bürstenkörper entweder von der Lochfeldplatte entfernt werden, die weiterhin mit dem Drehteller 1 umlaufen. Alternativ werden die Lochfeldplatten 3 an der Entnahmestation III zusammen mit den umspritzten Bürstengrundkörpern 12 aus dem Drehteller 1 entnommen und diese nach Entfernen von der Lochfeldplatte auf eine Nachbehandlungs- und/oder Verpackungsstrecke abgelegt.

Wie der Figur 2 zu entnehmen ist, weist jede Spritzgießstation I und II ein separates Plastifizieraggregat 13, 14 auf. In dem dem ersten Werkzeug 4 zugeordneten ersten Plastifizieraggregat 13 wird vorzugsweise eine Hartkomponente plastifiziert und unter Druck in die ersten Formnester 8 eingespritzt. Hierdurch wird ein Bürstengrundkörper 12 aus der Hartkomponente ausgeformt. In dem zweiten Plastifizieraggregat 14, welches mit dem zweiten Formnest 9 kommuniziert, wird ein weicherer, elastischer Kunststoff plastifiziert, der zur Umspritzung des Bürstengrundkörpers 12 an vorbestimmten Stellen auf den Bürstengrundkörper 12 aufgespritzt wird.

Mit dem in der Zeichnung gezeigten Ausführungsbeispiel lassen sich mit Borstenbündeln versehene Bürstenkörper im Wege des Spritzgießens herstellen. Die Lochfeldplatte 3 ist hierzu vorzugsweise mit Borstenbündeln bestopft worden, d.h. die einzelnen Löcher der Lochfeldplatte 3 tragen jeweils die Löcher durchragende Borstenbündel, die an ihrem befestigungsseitigen Ende angeschmolzen sind. Diese Enden ragen als Einlegeteile in das erste Formnest 8 hinein und werden beim Einspritzen der Hartkomponente in der ersten Spritzgießstation I in dem Bürstengrundkörper 12 eingesiegelt. Der hierbei erstellte Bürstenkopf bleibt in der zweiten Station unverändert. Lediglich der hinter dem Hals liegende Griffstiel des Bürstengrundkörpers 12 wird mit der Weichkomponente, die in der zweiten Spritzgießstation II Plastifizierten angespritzt wird, versehen.

Es ist zur Variation der Bürstenkörper lediglich erforderlich, die zweite Spritzgießstation auszutauschen. Die relativ teure Lochfeldplatte kann auch bei einem Austausch des zweiten Werkzeuges 2 durch ein Werkzeug mit anderer Formnestgeometrie beibehalten werden. So lassen sich unterschiedliche Griffe und insbesondere unterschiedlich geformte Griffe einer Bürste, insbesondere einer Zahnbürste kostengünstig erstellen.

In etwa gleiche Vorzüge können auch erreicht werden, wenn anstatt einer Lochfeldplatte, d.h. einer mit Borstenbündeln versehenen Platte zur Komplettierung des ersten Werkzeuges eine Formplatte eingesetzt wird, in welcher eine oder mehrere Kavitäten zum Ausbilden eines mit Einbringlöchern für die Borstenbündeln versehenen Bürstenkopfes ausgespart sind. Mit anderen Worten lässt sich die erfindungsgemäße Vorrichtung nicht nur für die Befestigung von Borstenbündeln in der so genannten Ankerlos-Technologie, sondern auch zur Herstellung von Bürstenkörpern nutzen, in welche später die Borstenbündel eingebracht werden.

Bei dem vorstehend beschriebenen Ausführungsbeispiel erfolgt eine Relativbewegung zwischen den Werkzeugen 4, 6 und dem Drehteller 1 dadurch, dass der Drehteller 1 ausgehoben wird. Alternativ können selbstverständlich auch die Werkzeuge 4, 6 abgesenkt werden. Weiterhin alternativ ist es möglich, zumindest die die Lochfeldplatte 3 aufnehmende Werkzeughälfte 4' bzw. 6' in radialer Richtung von der Drehachse 11 und in der Ebene des Drehtellers 1 weg zu bewegen, wobei es hierzu abhängig von der Geometrie des Formnestes 8, 9 erforderlich sein kann, die jeweilige Werkzeughälfte 4', 6' zumindest ein Stück gegenüber der Lochfeldplatte 3 auszuheben.

### Bezugszeichenliste

- 1: Drehteller
- 2: Seitenfläche
- 3: Lochfeldplatte
- 4: erstes Werkzeug
- 4',4": erste Werkzeughälfte
- 6: zweites Werkzeug
- 6',6": zweite Werkzeughälfte
- 8: erstes Formnest
- 9: zweites Formnest
- 10: Kavität
- 11: Drehachse
- 12: Bürstengrundkörper
- 13: erstes Plastifizieraggregat
- 14: zweites Plastifizieraggregat

## Patentansprüche

1. Vorrichtung zum Spritzgießen von Bürstenkörpern mit einer ersten Spritzgießstation (I) mit wenigstens einem Formnest (8) zum Ausbilden eines Bürstengrundkörpers (12), einer zweiten Spritzgießstation (II) mit wenigstens einem zweiten Formnest (9), das größer als das erste Formnest (8) ist, zum Umspritzen des Bürstengrundkörpers (12) und einer Handhabe (1) mit der die Bürstengrundkörper von der ersten zu der zweiten Spritzgießstation (I; II) bewegbar sind,
**dadurch gekennzeichnet,**
**dass** die Handhabe (1) außerhalb eines das erste und/oder das zweite Formnest (8; 9) aussparenden Werkzeugs (4, 6) angeordnet ist und dass die Handhabe (1) im Wesentlichen in der Trennebene des Werkzeugs (4, 6) vorgesehen ist.

2. Vorrichtung nach Anspruch 1, **dadurch gekennzeichnet, dass** die Handhabe (1) um eine Drehachse (11), die sich rechtwinklig zu der Trennebene der Formnester (8; 9) erstreckt, drehbar gelagert ist, dass die Handhabe (1) zu jedem Bürstengrundkörper (12) ein Halteelement (3) aufweist und dass die ersten und zweiten Formnester (8; 9) jeweils in separaten, radial außerhalb der Halteelemente (3) angeordneten ersten und zweiten Werkzeugen (4; 6) ausgespart sind.

3. Vorrichtung nach Anspruch 2 oder 3, **dadurch gekennzeichnet, dass** das Halteelement (3) für einen Bürstengrundkörper (12) durch ein Formwerkzeugteil (3) gebildet ist, dass eine zu dem ersten Formnest (8) passende Kavität (10) aufweist, und dass das Formwerkzeug (3) in das erste Werkzeug (4) einsetzbar ist.

4. Vorrichtung nach wenigstens einem der vorherigen Ansprüche, **dadurch gekennzeichnet, dass** das an der zweiten Spritzgießstation (II) befindliche Formwerkzeugteil (3) außerhalb des zweiten Werkzeugs (6) angeordnet ist und die Kavität (10) mit dem zweiten Formnest (9) kommuniziert.

5. Vorrichtung nach wenigstens einem der vorherigen Ansprüche, **dadurch gekennzeichnet, dass** das Formwerkzeugteil (3) mehrere identisch ausgebildete Kavitäten (10) aufweist, die jeweils bei an der ersten Spritzgießstation (I) befindlichem Formwerkzeugteil (3) mit zugeordneten ersten Formnestern (8) kommunizieren.

6. Vorrichtung nach wenigstens einem der vorherigen Ansprüche, **dadurch gekennzeichnet, dass** die Handhabe (1) in axialer Richtung relativ zu den Werkzeugen (4; 6) aushebbar ist.

7. Vorrichtung nach wenigstens einem der vorherigen Ansprüche, **dadurch gekennzeichnet, dass** den Werkzeugen (4; 6) unterschiedliche Plastifizieraggregate (13; 14) zugeordnet sind.
